# EUROPEAN PATENT APPLICATION

(11) **EP 1 080 634 A1**
(43) Date of publication of application: **07.03.2001**
(21) Application number: 00119273.1
(22) Date of filing: 06.09.2000
(51) Int. Cl.: A01K 5/00

(54) **Cutter-mixer wagon with vertical axis for fodder and grass silage having loading shovel**

(30) Priority: 06.09.1999 IT VI990074
(71) Applicant: Loppoli, Giuseppe, 35010 Grantorto (PD) (IT)
(72) Inventor: Loppoli, Giuseppe, 35010 Grantorto (PD) (IT)
(74) Representative: Bonini, Ercole

(57) **Abstract**

Cutter-mixer wagon (1) for fodder and grass silage, comprising a cutting-mixing screw (2) constituted by a container (3), the inside of which is provided with a helical element (6) whose conical profile converges upwards, said helical element rotating around a shaft (7) that defines a substantially vertical longitudinal rotation axis (Y).

The lateral surface (3b) of the container (3) is provided with a loading mouth (3c), the container being provided with a movable gate (8) whose edges can be joined to those of the loading mouth (3c), said gate (8) being connected to the container (3) through articulation means (9) suitable for moving it to open and close the mouth (3c). The movable gate (8) has a concave area (8a) with at the end a flat surface (8b), thanks to which the movable gate (8) has the shape and performs the function of a loader (20).

## Description

The invention concerns a cutter-mixer wagon for fodder and grass silage, provided with a cutting-mixing screw with vertical axis and with a loader.

It is already known that cutter-mixer wagons are equipment for the cutting and mixing of hay, fodder and grass silage in general, suitable for feeding livestock.

According to the known applications, they comprise a screw with vertical axis, consisting of a preferably cylindrical or truncated cone-shaped container, the inside of which is provided with a helical element mounted on a frame equipped with wheels and with coupling elements suitable for permitting pulling by means of a tractor.

The helical element is wound around a revolving shaft that defines the vertical longitudinal axis of the screw and is operated by the tractor engine, for example through a cardan-joint transmission.

The upper part of the container is provided with a loading mouth through which the silage that must be cut and mixed is introduced, while there are also secondary openings towards which the helical element conveys the processed material that will be unloaded.

The outer edge of the helical element is provided with projecting blades that can be fixed or rotary and that preferably, but not necessarily cooperate with other projecting blades positioned on the inner surface of the container to ensure improved cutting efficiency.

One of the drawbacks of the wagons of the known type is represented by the fact that the material to be cut must be loaded, for example, by means of a self-propelled machine with a loader that collects the material and unloads it into the container through the loading mouth.

In order to overcome this drawback - at least partially - cutter-mixer wagons have been designed, which are provided with one or more openable doors hinged at the lower part of the container.

The material to be processed is positioned on the doors when they are lowered and is dumped inside the wagon when they are closed.

However, the drawback of the wagons of the type described is represented by the fact that as the doors are closed their inclination with respect to the ground progressively increases. This means that the material to be loaded moves downwards, that is, is introduced in the wagon in correspondence with the lower part of the container, practically its bottom.

The aim of the present invention is to eliminate the drawbacks described above.

In particular, one of the first aims of the invention is to implement a cutter-mixer wagon with screw with vertical axis, provided with suitable means for the collection and loading of the material to be cut.

A further aim of the invention is that said loading means with which the wagon is to be provided should make it possible to load the material in correspondence with the higher part of the wagon.

The above mentioned aims have been achieved through the implementation of a cutter-mixer wagon for fodder and grass silage that, according to the main claim, comprises a cutting-mixing screw constituted by a container with an upper opening facing upwards, supported by a frame resting on wheels, the inside of said container being provided with a helical element whose conical profile converges towards said upper opening, said helical element rotating around a shaft that defines a substantially vertical longitudinal rotation axis, and is characterized in that the lateral surface of said container is provided with at least one loading mouth that occupies at least part of the container height, starting from said upper opening, and is provided with at least one movable gate whose edges can be joined to those of the loading mouth, said gate being connected to the container through articulation means suitable for moving it in order to open and close said mouth, and having at least a concave area with a flat surface at the end, which all together give the movable gate the shape and the function of a loader.

According to a favourite application of the invention that will be described in greater detail below, the articulation means are constituted by a pair of arms positioned at the ends of the gate and hinged to the container, operated by suitable actuators for the shifting of the gate itself.

To advantage, the invention makes it possible to collect the material to be processed from the ground and to load it into the container independently, with no need to use self-propelled loading vehicles.

Still to advantage, the wagon object of the invention makes it possible to lift the material and then dump it into the container through the loading mouth positioned near the upper opening and therefore in the higher part of the container, thus preventing the material from accumulating on the bottom, as it happens in the known cutter-mixer wagons.

The mentioned aims and advantages will be highlighted in greater detail in the description of one among many possible applications of the invention in question, illustrated in the attached drawings, wherein:
- Fig. 1 is a perspective view of the wagon of the invention with closed movable gate;
- Fig. 2 shows the wagon of Figure 1 with the movable gate open and adhering to the ground;
- Fig. 3 shows the wagon of Figure 1 with the gate being moved;
- Fig. 4 shows a detail of the wagon of Figure 1.

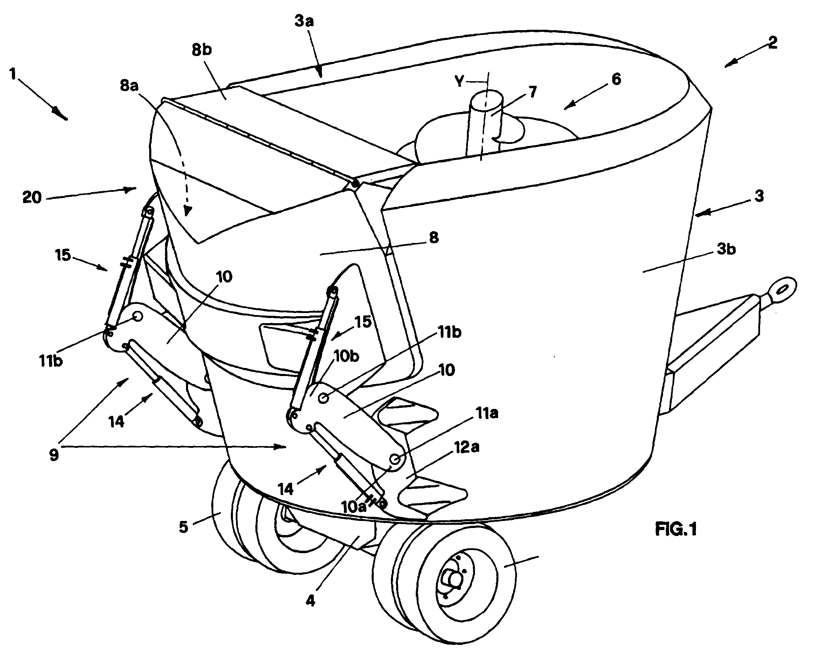

As it can be observed in Figure 1, the cutter-mixer wagon of the invention, indicated as a whole by 1, comprises a cutting-mixing screw, indicated as a whole by 2, constituted by a container 3 with the upper opening 3a facing upwards, supported by a frame 4 resting on wheels 5, the inside of said container being provided with a helical element 6 whose conical profile converges towards the upper opening 3a, said helical element rotating around a shaft 7 that defines a substantially vertical longitudinal rotation axis Y.

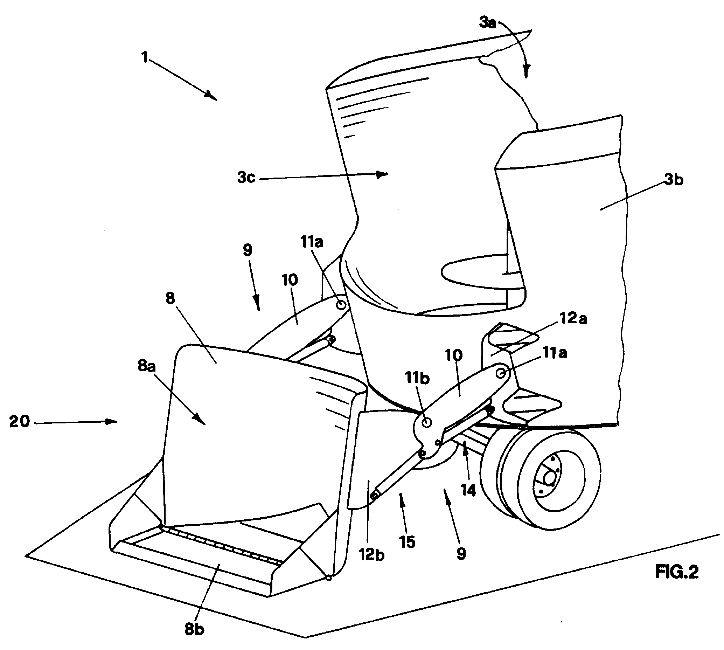

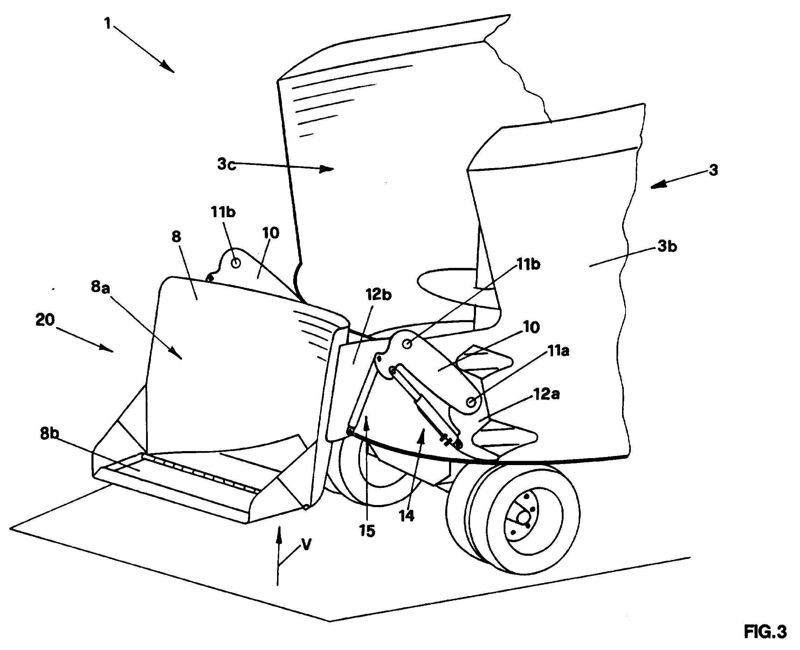

The lateral surface 3b of the container 3, as shown also in Figures 2 and 3, is provided with a loading mouth 3c that occupies part of the height of the container 3 and with a movable gate 8 connected to the container 3 through articulation means indicated as a whole by 9, suitable for opening and closing it with respect to the mouth 3c.

The edges of the gate 8, as it can be observed, can be joined to the corresponding edges of the mouth 3c and the gate 8 is also provided with a concave area 8a that faces the inside of the container when the gate 8 closes the mouth 3c, preferably featuring the same curvature as the container in order to ensure the continuity of the profile.

The end of the gate 8 is also provided with a flat surface 8b that faces the inside of the container when the gate 8 closes the mouth 3c, suitable for being positioned in such a way as to adhere to the ground when the gate 8 is open.

The presence of the concave area 8a with the flat surface 8b makes the movable gate 8 suitable for being used as a loader 20 set in motion by the articulation means 9.

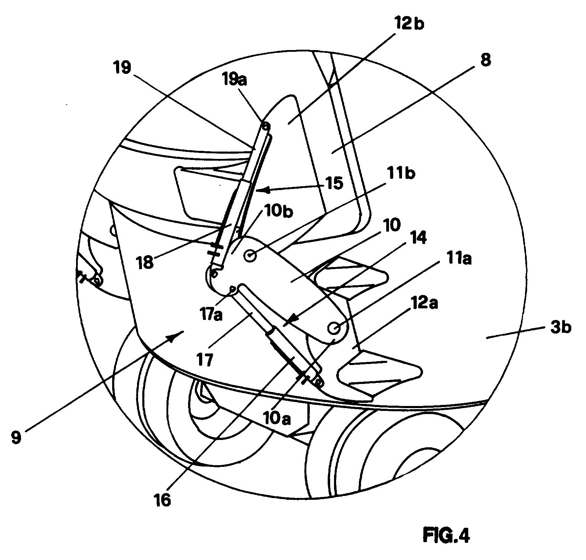

Said articulation means 9, as it can be observed in greater detail in Fig. 4, comprise a pair of articulation arms 10, each one of which features:
- a first end 10a hinged through a first pin 11a to a first bracket 12a projecting from the container 3;
- a second end 10b hinged through a second pin 11b to a second bracket 12b projecting outside the gate 8;
- actuators for the opening and closing of the gate 8 with respect to the mouth 3c of the container 3.

The actuators comprise a first hydraulic jack 14 interposed between the second end 10b of the arm 10 and the first bracket 12a and a second hydraulic jack 15 interposed between the second end 10b and the second bracket 12b.

According to the favourite application of the invention described, the first hydraulic jack 14 comprises a first cylinder 16, hinged to the first bracket 12a, with a sliding rod 17 having the end 17a hinged to the second end 10b of the arm 10 to obtain the rotation of the arm 10 around the first pin 11a.

The second hydraulic jack 15 comprises a second cylinder 18, hinged to the second end 10b of the arm 10, having a sliding rod 19 whose end 19a is hinged to the second bracket 12b to obtain the rotation of the gate 8 with respect to the arm 10 around the second pin 11b.

It is obvious, however, that the number, shape and type of arms, as well as the actuators that move them, may be different from those described.

The jacks 14 and 15 are hydraulically connected to a pressurized oil feeding unit, independently of each other, so that the closing of the gate 8 takes place essentially in two phases:
- the first phase is represented by the lifting of the gate 8 in a substantially vertical direction V, while the flat surface 8b remains substantially parallel to the ground;
- in the second phase the gate 8 is rotated around the fulcrum points positioned on the arms 9 in such a way as to overturn it and introduce the material placed on it into the container 3 from the higher part of the container itself, and have the gate close the loading mouth 3c.

From an operational point of view, when the wagon is positioned as shown in Fig. 1, the gate 8 closes the loading mouth 3c and the wagon carries out the cutting procedure.

To introduce the material to be cut into the wagon, suitable control means, not represented in the figure, deliver pressurized oil to the hydraulic jacks 14 and 15, until the gate 8 with the fiat surface 8b is positioned at ground level, as shown in Fig. 2.

In this case the gate 8 performs the function of a loader and collects the material to be loaded.

Through the first hydraulic cylinder 14 the gate is then lifted in a substantially vertical direction and, passing through the intermediate position shown in Fig. 3, it is lifted to its maximum height.

At this point, the operation of the second hydraulic cylinder 15 overturns the movable gate 8 and the material contained in it is dumped inside the container 3 starting from its higher part, thus preventing the material from accumulating on the bottom of the container.

When the gate 8 is positioned so that the mouth 3c is completely closed, the container 3 assumes the closed configuration shown in Fig. 1 and the wagon can be operated again.

It is understood that the number and position of the openings and of the relevant gates with which the wagon can be equipped may vary according to the needs.

Any changes not mentioned and not described herein that may however be made on the invention upon implementation are all included in the inventive concepts expressed in the following claims and are therefore to be considered protected by the patent.

## Claims

1. Cutter-mixer wagon (1) for fodder and grass silage, comprising a cutting-mixing screw (2) constituted by a container (3) with an open upper opening (3a) facing upwards, supported by a frame (4) resting on wheels (5), the inside of said container being provided with a helical element (6) whose conical profile converges towards said upper opening (3a), said helical element rotating around a shaft (7) that defines a substantially vertical longitudinal rotation axis (Y), **characterized in that** the lateral surface (3b) of said container (3) is provided with at least one loading mouth (3c) that occupies at least part of the height of the container (3) starting from said upper opening (3a) and is provided with at least one movable gate (8) whose edges can be joined to those of said loading mouth (3c), said movable gate (8) being connected to the container (3) through articulation means (9) suitable for moving it to open and close said mouth (3c), said movable gate (8) having at least a concave area (8a) with a flat surface (8b) at its end, having the shape and the function of a loader (20).

2. Cutter-mixer wagon (1) according to claim 1), **characterized in that** said articulation means (9) comprise a pair of articulation arms (10) substantially parallel to each other, each one of which is provided with a first end (10a) hinged by means of a first pin (11a) to a first bracket (12a) projecting from said container (3) and a second end (10b) hinged by means of a second pin (11b) to a second bracket (12b) projecting from said gate (8) and cooperates with actuators (14, 15) in order to move said gate (8) with respect to said mouth (3c).

3. Cutter-mixer wagon (1) according to claim 2), **characterized in that** said actuators comprise a first hydraulic jack (14) interposed between said second end (10b) of said arm (10) and said first bracket (12a), and a second hydraulic jack (15) interposed between said second end (10b) of said arm (10) and said second bracket (12b).

4. Cutter-mixer wagon (1) according to claim 3), **characterized in that** both said hydraulic jacks (14, 15) are connected to a pressurized oil feeding unit independently of each other.

5. Cutter-mixer wagon (1) according to claim 3), **characterized in that** said first hydraulic jack (14) comprises a first cylinder (16) hinged to said first bracket (12a) and a sliding rod (17) having the end (17a) hinged to said second end (10b) of said arm (10).

6. Cutter-mixer wagon (1) according to claim 3), **characterized in that** said second hydraulic jack (15) comprises a cylinder (18) hinged to said second end (10b) of said arm (10) and a sliding rod (19) having the end (19a) hinged to said second bracket (12b).
